Europäisches Patentamt

European Patent Office

Office européen des brevets

(19)

(11) Veröffentlichungsnummer : **0 126 896
B1**

(12) **EUROPÄISCHE PATENTSCHRIFT**

(45) Veröffentlichungstag der Patentschrift :
16.06.87

(21) Anmeldenummer : 84103501.7

(22) Anmeldetag : 29.03.84

(51) Int. Cl.⁴ : **G 06 F 15/40**, G 06 F 12/02,
G 06 F   7/24, G 11 C 15/00

(54) **Hybrid-Assoziativspeicher, bestehend aus einem nicht assoziativen Basisspeicher und einer assoziativen Oberfläche.**

(30) Priorität : 30.05.83 DE 3319581

(43) Veröffentlichungstag der Anmeldung :
05.12.84 Patentblatt 84/49

(45) Bekanntmachung des Hinweises auf die Patenterteilung : 16.06.87 Patentblatt 87/25

(84) Benannte Vertragsstaaten :
AT BE CH DE FR GB IT LI NL SE

(56) Entgegenhaltungen :
DE-A- 2 547 052
DE-A- 3 216 905
US-A- 4 149 262
US-A- 4 153 943
ELECTRONIC DESIGN, Band 26, Nr. 21, 11. Oktober
1978, Seiten 226-234, Rochelle Park, USA; R.L. HOR-
TON et al.: "Make the most of bit-slice flexibility and
design high-performance processors"
THIRD USA-JAPAN COMPUTER CONFERENCE PRO-
CEEDINGS, San Francisco, 10.-12. Oktober 1978, Seiten 468-472, AFIPS & IPSJ, Washington, USA; T.
NAKASHIMA et al.: "A high-speed eight-bit microprocessor slice"

(73) Patentinhaber : **Siemens Aktiengesellschaft Berlin
und München
Wittelsbacherplatz 2
D-8000 München 2 (DE)**

(72) Erfinder : **Wolf, Gerhard, Dipl.-Ing.
Chopinstrasse 5
D-8000 München 60 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

EP 0 126 896 B1

## Beschreibung

Die Erfindung betrifft einen Hybrid-Assoziativspeicher, bestehend aus einem nicht assoziativen Basisspeicher und einer assoziativen Oberfläche, wobei der Basisspeicher in Gruppen von einzeln auswählbaren Dateneinheiten unterteilt ist und in der assoziativen Oberfläche eine der Anzahl von Dateneinheiten je Gruppe entsprechende Anzahl von Verknüpfungseinheiten für jeweils mehrere Bits vorgesehen ist, die jeweils eine Dateneinheit in assoziativer Weise überprüfen, so daß der assoziativen Oberfläche jeweils ganze Gruppen von Dateneinheiten zugeführt und diese überprüfte werden können. Ein derartiger Hybrid-Assoziativspeicher ist beispielsweise aus der DE-OS 32 16 905 bekannt, wenn man unterstellt, daß die Speicherregister der Assoziativspeicher-Zellen aus einem anderen Speicher geladen werden. Bei dieser bekannten Anordnung bestehen die den Verknüpfungseinheiten der assoziativen Oberfläche entsprechenden Assoziativspeicher-Zellen jeweils aus einem Operationswerk, das sich in ein Assoziationswerk zur Durchführung der Assoziationsrelationen und ein nachgeschaltetes Verarbeitungs- werk zur Durchführung von Verknüpfungsoperationen bei Vorliegen einer Trefferanzeige durch das zugehörige Assoziationswerk gliedert. Das Assoziationswerk besteht im wesentlichen aus einem Vergleicher und ggf. einem Antivalenzprüfnetzwerk mit Zähler zur Ermittlung eines Abstandswertes auf Bitebene, und das Verarbeitungswerk besteht im wesentlichen aus einer arithmetisch-logischen Verknüpfungseinheit. Beide Werke sind zudem maskierbar, so daß gegebenenfalls nur ausgewählte Bereiche der jeweils bereitstehenden Dateneinheit verarbeitet werden können. Ein derartiger kombinierter Aufbau der Assoziativspeicher-Zelle als Verknüpfungseinheit einer assoziativen Oberfläche ist einerseits recht aufwendig, und andererseits ist die Anzahl der durchführbaren Assoziationsrelationen sehr stark vom jeweiligen Aufbau des gesonderten Assoziationswerkes abhängig. Des weiteren ist der erforderliche Zeitaufwand für die Durchführung verschiedener Aufgaben, wie z. B. das Suchen anhand eines die Arbeitsbreite der Verknüpfungseinheit übersteigenden Suchargumentes, zu groß, da für die Trefferverknüpfung der einen Globaltreffer bewirkenden Teiltreffer je Verknüpfungseinheit bei der bekannten Anordnung nach jeder durchgeführten Assoziationsrelation auf einen gesonderten Elementarzyklus für das Verarbeitungswerk umgeschaltet werden müßte, soweit an derartige Aufgaben bei der bekannten Anordnung überhaupt gedacht ist, da das Verarbeitungswerk nur trefferabhängig aufgrund einer vorangehend durchgeführten Assoziationsrelation arbeitet.

Aufgabe der Erfindung ist es daher, die einzelnen Verknüpfungseinheiten der assoziativen Oberfläche eines Hybrid-Assoziativspeichers der eingangs genannten Art so zu gestalten, daß bei geringerem Aufwand für die einzelnen Verknüpfungseinheiten der Umfang der durchführbaren Assoziationsrelationen wesentlich erweitert wird und daß gleichzeitig die Voraussetzung zum weitgehend selbständigen Arbeiten bei der Durchführung verschiedener Aufgaben, z. B. beim Suchen oder Sortieren von Daten, infolge einer beliebigen Mischung von durchzuführenden Assoziationsrelationen und beliebigen Verknüpfungsfunktionen arithmetischer oder logischer Art in Verbindung mit einer Vielzahl von wahlweise möglichen Zuordnungen der einzelnen Bausteine der Verknüpfungseinheit in wenig Zeit erfordernder Weise eröffnet wird.

Diese Aufgabe wird im grundsätzlichen gelöst durch die kennzeichnenden Merkmale des Patentanspruches 1.

Danach ist Kernstück einer jeden Verknüpfungseinheit der assoziativen Oberfläche des neuen Hybrid-Assoziativspeichers jeweils einer einzige arithmetisch-logische Einheit (ALU) in Verbindung mit den üblichen Operanden- und Ergebnisregistern, die wahlweise sowohl für die Durchführung von Assoziationsrelationen als auch für die Durchführung von arithmetischen und logischen Verknüpfungsfunktionen benutzt wird. Die Treffer- bzw. Nichttreffersignale bei der Durchführung von Assoziationsrelationen werden dabei von den Anzeigen der ALU abhängig von der jeweils durchgeführten Assoziationsrelation abgeleitet.

Wesentlich ist des weiteren auch die Begrenzung der Arbeitsbreite auf ein Zeichen oder ein Byte mit z. B. acht Bit als kleinste für Such- oder Sortiervorgänge maßgebende Dateneinheit, wobei eine solche Einheit als Datensubeinheit Bestandteil einer umfassenderen Dateneinheit aus vier oder acht Bytes, wie für Datenleitungssysteme von Datenverarbeitungsanlagen üblich, sein kann. Eine solche Begrenzung der Arbeitsbreite stellt sicher, daß in den überwiegenden Fällen des Suchens und Sortierens die gesamte Arbeitsbreite ohne Einschränkung durch Maskierung wirksam ist und bei Überprüfung von aus einer Vielzahl von Byte bestehenden Datenfolgen aus dem Basisspeicher durch dieselbe Verknüpfungseinheit der assoziativen Oberfläche keine Verkettung der Verknüpfungseinheit mit den benachbarten Verknüpfungseinheiten erforderlich ist, jede Verknüpfungseinheit also unabhängig von der anderen arbeiten kann.

Das schafft u. a. die Voraussetzung, daß bei Überprüfung von Daten von Datenfolgen mit längeren Suchargumenten die Teiltreffer innerhalb der Verknüpfungseinheit gekettet werken können, um einen Globaltreffer zu ermitteln, und zwar ohne daß nach jeder durchgeführten Assoziationsrelation ein zusätzlicher Elementarzyklus für die Durchführung einer Verknüpfungsfunktion mit der arithmetisch-logischen Einheit eingeschoben werden muß. Dafür genügt beispielsweise eine einzige zusätzliche bistabile Kippstufe, die bei einem Nichttreffer in Folge zurückgestellt wird und damit z. B. eine Suchfolge abbrechen und auf die nachfolgende Suchfolge im Rahmen eines Suchvorganges umschalten läßt.

Durch zusätzliche Elemente, wie eine Einrichtung zur Bildung von Quersummen am Ausgang der ALU, durch die Einschaltung zusätzlicher Schiebemöglichkeiten im ALU-Kreislauf können Untersuchungen auf Ähnlichkeiten, Treffergewichtungen und ähnliche Funktionen innerhalb jeder Verknüpfungseinheit direkt vorgenommen werden. Insbesondere kann durch ein zusätzliches Maskenregister in Verbindung mit einer Maskensteuerung je Verknüpfungseinheit eine individuelle oder aber eine von außen gesteuerte globale Bitmaskierung vorgenommen werden. Entsprechende Weiterbildungen der Erfindung beinhalten die Patentansprüche 2 bis 18.

Besondere Vorteile ergeben sich bei einer Weiterbildung der Erfindung gemäß Patentanspruch 19, demzufolge die aus mehreren Verknüpfungseinheiten zusammengesetzte assoziative Oberfläche des Hybrid-Assoziativspeichers mit einem speziell ausgebildeten Basisspeicher zusammenarbeit, wie er auch in der älteren europäischen Patentanmeldung 0 123 169 beschrieben ist. Trotz der normalen Zeilenansteuerung für die Ein- oder Ausspeicherung von aus mehreren Zeichen in Form von Subeinheiten bestehenden Dateneinheiten bietet ein solcher Speicher in Verbindung mit Adressen- und Datenumordnern die Möglichkeit, korrespondierende Zeichen oder Subeinheiten aufeinanderfolgender Dateneinheiten gleichzeitig und die aufeinanderfolgenden Zeichen verschiedener Folgen von Dateneinheiten nacheinander in Form von vertikalen Strings je Verknüpfungseinheit der assoziativen Oberfläche zur Verfügung zu stellen. Auf diese Weise kann gegenüber einer Ansteuerung der einzelnen Verknüpfungseinheiten über ein gemeinsames Datenleitungssystem — wie etwa bei der eingangs genannten DE-OS 32 16 905 — die Leitungsfähigkeit wegen des kontinuierlichen Datenflusses ganz entscheidend gesteigert werden, so daß gerade in dieser kombinatorischen Ausgestaltung von assoziativer Oberfläche und Basisspeicher ein Hybrid-Assoziativspeicher allerhöchster Leistungsfähigkeit erhalten wird. Weiterbildung dieses speziellen Hybrid-Assoziativspeichers gemäß der Erfindung ergeben sich aus den restlichen Patentansprüchen 20 bis 22.

Nachfolgend sei die Erfindung anhand von in der Zeichnung dargestellen Ausführungsbeispielen näher erläutert. Im einzelnen zeigen

Figur 1 den Aufbau einer Verknüpfungseinheit als Baustein der assoziativen Oberfläche eines Hybrid-assoziativspeichers gemäß der Erfindung,

Figur 2 den prinzipiellen Aufbau der Treffersteuerung ANZ-ST/T-ST von Fig. 1,

Figur 3 den prinzipiellen Aufbau der Maskensteuerung M-ST von Fig. 1 und

Figur 4 den prinzipiellen Aufbau eines Hybridassoziativspeichers mit versetzter Einordnung der Subeinheiten von Dateneinheiten im Basisspeicher zur Bildung paralleler vertikaler Datenfolgen für die einzelnen Verknüpfungseinheiten der assoziativen Oberfläche gemäß einer besonderen Ausführungsform der Erfindung.

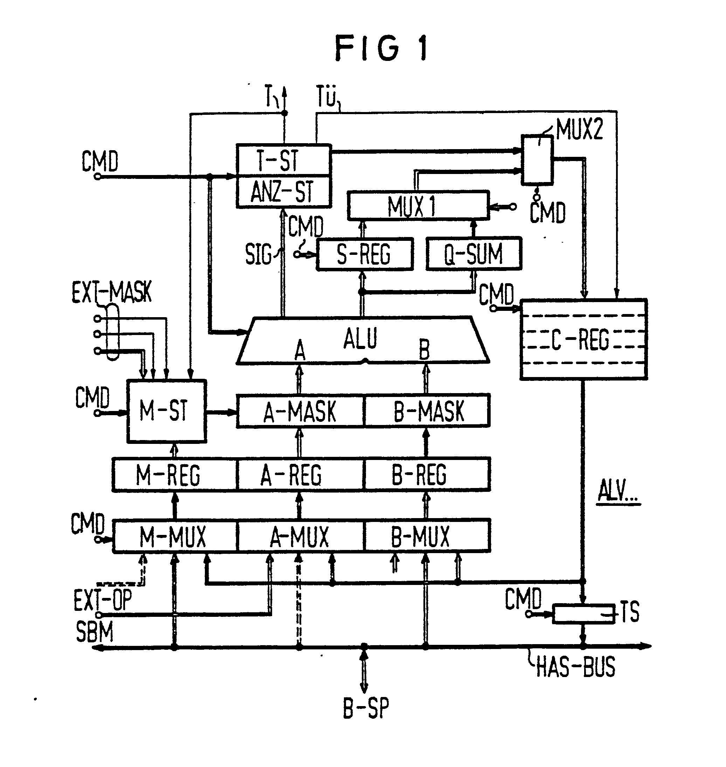

Kernstück der in Fig. 1 gezeigten Verknüpfungseinrichtung ALV, aus der die assoziative Oberfläche eines Hybrid-Assoziativspeichers zusammengesetzt ist, ist eine arithmetisch-logische Einheit ALU mit der Arbeitsbreite für ein Zeichen, in der Regel acht Bit. Den beiden Operandeneingängen der ALU ist jeweils eine Maskiereinrichtung A-MASK bzw. B-MASK, ein Operandenregister A-REG bzw. B-REG und ein Auswahlschalter A-MUX bzw. B-MUX vorgeschaltet. Über letztere können die beiden Operandenregister aus den verschiedensten Quellen wahlweise geladen werden. Im vorliegenden Falle sei unterstellt, daß dem Register B-REG in den überwiegenden Anwendungsfällen Daten aus dem Basisspeicher B-SP des Hybrid-Assoziativspeichers zugeführt werden, die anhand eines im anderen Operandenregister A-REG zur Verfügung gestellten Suchargumentes SBM zu überprüfen sind. Anstelle des Argumentes SBM können dem Register A-REG auch externe Operanden EXT-OP für durchzuführende Verknüpfungsfunktionen zugeführt werden. Des weiteren können die Operandenregister auch vom Ergebnisregister C-REG der ALU, das zweckmäßig aus einem Registersatz von z. B. 16 Einzelregistern besteht, geladen werden.

In der Regel weist das Datenleitungssystem HAS-BUS des Hybridassoziativspeichers eine Datenbreite auf, die einer Vielzahl von Zeichen oder Bytes entspricht, z. B. in Anpassung an die Datenleitungssysteme von Datenverarbeitungsanlagen vier oder acht Bytes. Entsprechend werden vom Basisspeicher B-SP jeweils Dateneinheiten bereitgestellt, deren Breite die Arbeitsbreite einer Verknüpfungseinheit übersteigt, und es sind kann ensprechend viele Verknüpfungseinheiten parallel mit den entsprechenden Leitungen des Datenleitungssystems HAS-BUS zu verbinden. Über das Leitungssystem HAS-BUS können aber auch Dateneinheiten dem Basisspeicher B-SP zugeführt werden, u. a. auch über die Torschaltung TS von den Ergebnisregistern C-REG der angeschlossenen Verknüpfungseinheiten.

Analog zu den beiden Operandenregistern A-REG und B-REG ist auch noch ein gesondertes Maskenregister M-REG mit vorgeschaltetem Auswahlschalter M-MUX vorgesehen, das ebenfalls aus mehreren Quellen geladen werden kann, z. B. vom Ergebnisregister C-REG oder vom Datenleitungssystem HAS-BUS und ggf. auch von einer externen Quelle.

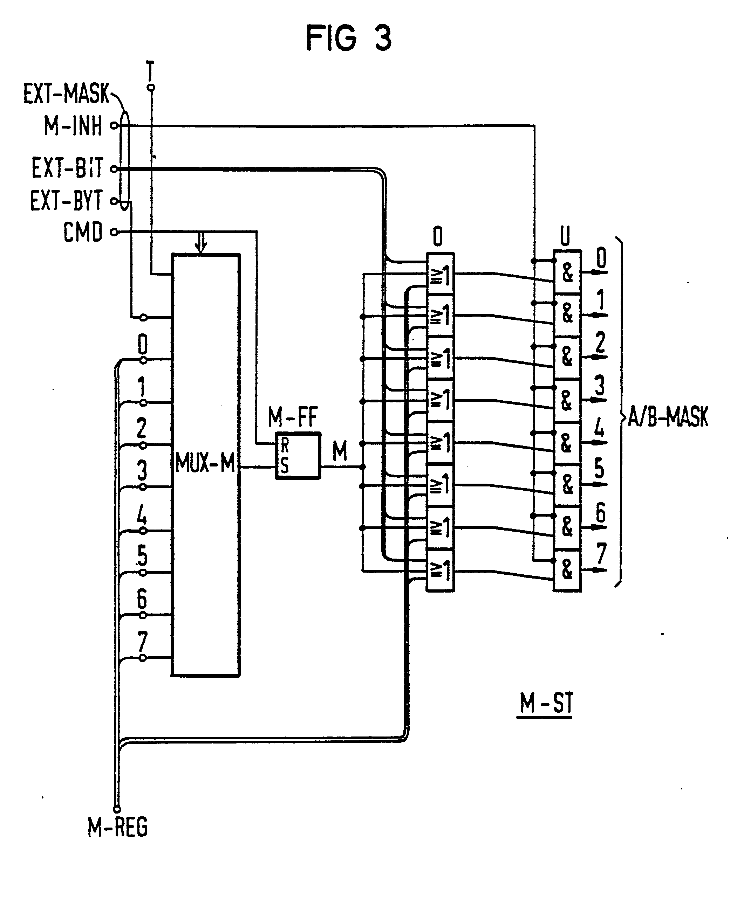

Mit dem Maskenregister M-REG ist des weiteren eine Maskensteuerung M-ST zur Einstellung der Operandenmasken A-MASK und B-MASK gekoppelt. Neben dem Maskeninformationen aus dem Maskenregister M-REG können von dieser Steuerung auch direkt zugeführte externe Maskeninformationen EXT-MASK verarbeitet und vorliegende Treffersignale T berücksichtigt werden. Die Arbeitsweise dieser Maskensteuerung M-ST wird später noch anhand von Fig. 3 näher erläutert werden.

Der Ausgang der Verknüpfungseinheit ALU ist parallel mit einem Ringschieberegister S-REG und einem Quersummenbildner Q-SUM verbunden. Auf das gesonderte Schieberegister kann verzichtet werden, wenn die Operandenregister A-REG und B-REG zugleich diese Funktion übernehmen. Außerdem

3

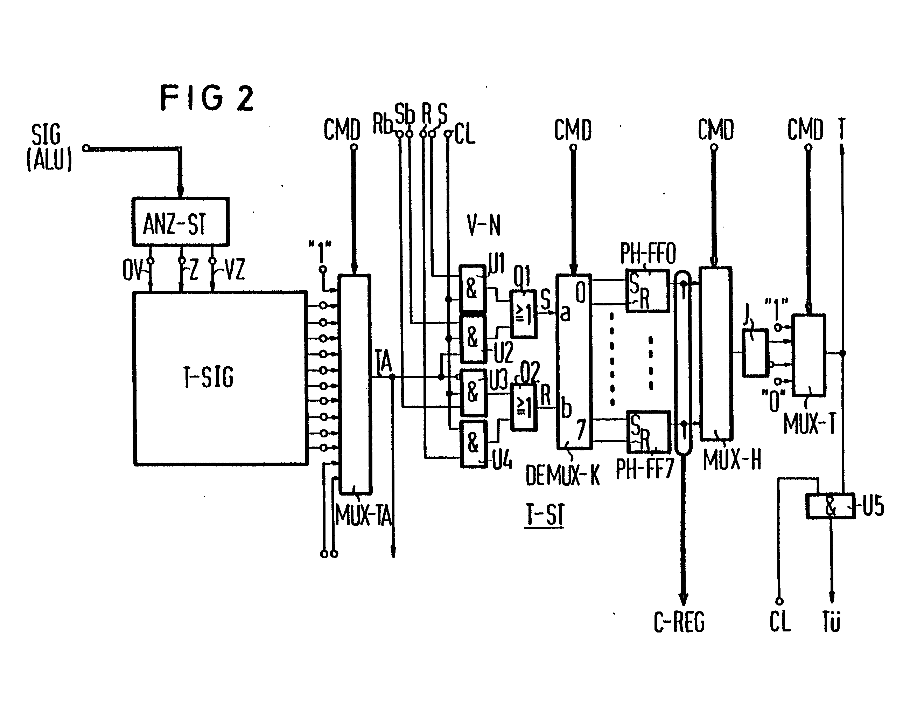

werden die Ergebnissignale SIG der ALU von einer Anzeigensteuerung ANZ-ST zur Bildung der üblichen Anzeigen ausgewertet. Mit dieser Anzeigensteuerung ist eine Treffersteuerung T-ST gekoppelt, die abhängig von den jeweils vorliegenden Anzeigen und der jeweils durchgeführten Assoziationsrelation ermittelt, ob ein Treffer erzielt worden ist oder nicht und wie das jeweilige Trefferergebnis zu werten ist. Weitere Aufgaben der Treffersteuerung T-ST werden ebenfalls später noch anhand von Fig. 2 erläutert werden.

Ergebnisse der Treffersteuerung T-ST können ebenso wie die Ergebnisse des Quersummenbildners Q-SUM oder der ALU bzw. des zwischengeschalteten Schieberegisters S-REG über Auswahlschalter MUX1 und MUX2 an das Ergebnisregister C-REG weitergeleitet werden, wobei die Übernahme in das Ergebnisregister ggf. vom Vorliegen eines Steuersignals $T_{ü}$ der Treffersteuerung T-ST abhängig ist.

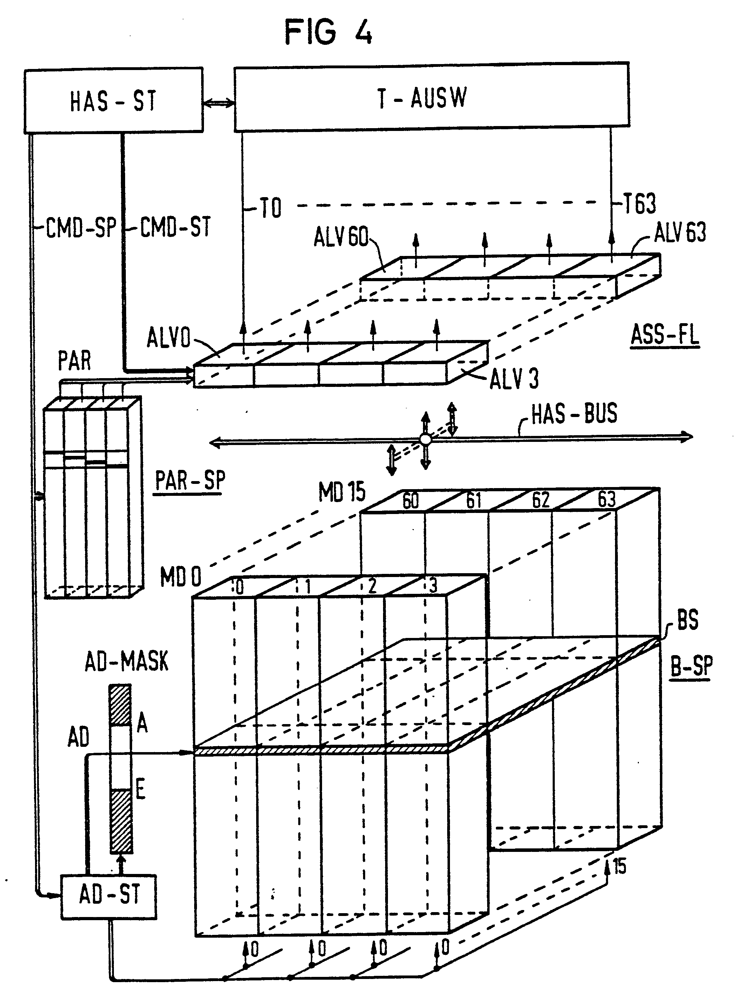

Das Tätigwerden der einzelnen genannten Bauteile der Verknüpfungseinheit und die Art ihres Tätigwerdens wird — wie gezeigt — durch Steuersignale CMD einer übergeordneten Ablaufsteuerung — HAS-ST in Fig. 4 — festgelegt. Trotz der einheitlichen Kennzeichnung dieser Signale mit CMD dürfte klar sein, daß es sich hierbei um unterschiedliche Signale auf einer oder mehreren Signalleitungen handelt, um die einzelnen Bauteile ihrer Funktion entsprechend ansteuern zu können. Das gilt insbesondere im Hinblick auf die ALU, der mitzuteilen ist, welche Funktion jeweils ausgeführt werden soll. Insgesamt können für den Aufbau der Verknüpfungseinheit jeweils herkömmliche Bauelemente verwendet werden, wobei sich der Aufbau der Maskensteuerung M-ST und der Treffersteuerung T-ST aus der nachfolgenden Beschreibung anhand von Fig. 3 und Fig. 2 ergibt. Alle diese Bauelemente bzw. Bauteile werden zweckmäßig in einem integrierten Schaltkreis zusammengefaßt, um einen möglichst kompakten Aufbau mit kurzen Leitungswegen zu erhalten.

Bevor auf die Vielzahl der sich aus einem solchen Aufbau ergebenden Anwendungsmöglichkeiten eingegangen wird, soll zuvor der Aufbau der Treffersteuerung T-ST anhand von Fig. 2 und der Aufbau der Maskensteuerung M-ST anhand von Fig. 3 erläutert werden.

Fig. 2 zeigt im linken oberen Teil die Anzeigensteuerung ANZ-ST, die in an sich bekannter Weise die benötigten Anzeigen aus den Signalen SIG der ALU ermittelt. Es sind dies beispielsweise die Anzeigen OV für den Überlauf, Z für das Ergebnis Null und VZ für das Vorzeichen des Verknüpfungsergebnisses. Aus diesen Anzeigen werden in der Einrichtung T-SIG die den einzelnen Assoziationsrelationen entsprechenden Treffersignale gebildet, von denen mit dem Auswahlschalter MUX-TA das jeweils zutreffende Treffersignal ausgewählt und als Trefferanzeige TA weitergeleitet wird. Die einzelnen Treffersignale werden beispielsweise nach der folgenden Tabelle gebildet, wobei die in der Tabelle gezeigten Verknüpfungen und Zuordnungen nur ein Ausführungsbeispiel darstellen, das in beliebiger Weise abgewandelt werden kann.

| Nr. | Ass.-Relation | ALU-CMD | Bedingung |
|---|---|---|---|
| 1 | B GLEICH A | B - A | $Z \ \& \ \overline{OV} = 1$ |
| 2 | B UNGLEICH A | B - A | $\overline{Z} \ \& \ \overline{OV} = 1$ |
| 3 | B GRÖSSER A | B- A | $\overline{Z} \ \& \ \overline{V} \ \& \ \overline{OV} = 1$ |
| 4 | B KLEINER A | B - A | $V \ \& \ \overline{OV} = 1$ |
| 5 | B GLEICH/GRÖSSER A | B - A | $\overline{V} \ \& \ \overline{OV} = 1$ |
| 6 | B KLEINER /GLEICH A | B - A | $(Z \ ODER \ V) \ \& \ \overline{OV} = 1$ |
| 7 | B POSITIV | B bzw.B+O | $\overline{V} \ \& \ \overline{OV} = 1$ |
| 8 | B NEGATIV | B bzw.B+O | $V \ \& \ \overline{OV} = 1$ |
| 9 | B GLEICH NULL | B bzw.B+O | $Z \ \& \ \overline{OV} = 1$ |
| 10 | ÜBERLAUF | ---- | $OV = 1$ |

Ist die von der jeweils durchgeführten Assoziationsrelation abhängige Verknüpfungsbedingung für die Anzeigen erfüllt, so wird auf der zugehörigen Ausgangsleitung der Einrichtung T-SIG ein Treffer mit dem Signal « 1 » angezeigt, während ein Nichttreffer das Signal « 0 » geliefert wird.

Die in der Tabelle gezeigten Verknüpfungen und Zuordnungen stellen nur ein Ausführungsbeispiel dar, das in belieber Weise abgewandelt werden kann.

Die so ermittelte und ausgewählte Trefferanzeige TA wird nun nicht unmittelbar als Treffer T weitergeleitet, sondern sie wird gegebenenfalls abhängig von dem jeweiligen Anwendungsfall entsprechenden Randbedingungen modifiziert. Zu diesem Zweck ist ein aus den UND-Gliedern U1 bis U4 und den ODER-Gliedern O1 und O2 bestehendes Verknüpfungsnetzwerk vorgesehen, das Setz- und Rücksetzsignale S bzw. R für eine nachgeschaltete bistabile Kippstufe PH-FF liefert. Im vorliegenden Falle ist entsprechend der Arbeitsbreite der Verknüpfungseinheit je Bitstelle eine Kippstufe vorgesehen, insgesamt also die Kippstufen PH-FFO bis PH-FF7, von denen jeweils eine über den vorgeschalteten

4

Auswahlschalter DEMUX-K angesteuert wird. Mit diesen Kippstufen können so in einfacher Weise bei der Überprüfung von Datenfolgen mit einem aus mehreren Zeichen bestehenden Argument entstehende Teiltreffer gekettet und daraus bei erfüllter Kettungsbedingung ein Globaltreffer abgeleitet werden, wobei darüber hinaus eine Kettung solcher Globaltreffer von unterteilten Datenfolgen möglich ist.

Um in der Art der Modifikation und bezüglich der auszuführenden Kettungsfunktionen möglichst frei zu sein, können die Trefferkippstufen PH-FF... durch das Verknüpfungsnetzwerk V-N sowohl unbedingt als auch bedingt gesetzt oder zurückgesetzt werden, was durch die Steuersignale S und R für die unbedingte Einstellung und durch die Steuersignale $S_b$ und $R_b$ für die bedingte, d. h. für die von der jeweiligen Trefferanzeige TA abhängige Einstellung ermöglicht wird, die wie die übrigen Signale CMD von der übergeordneten Steuerung geliefert werden.

Die von den Kettungskippstufen PH-FFO bis PH-FF7 zur Verfügung gestellten Treffersignale sind durch einen nachgeschalteten Auswahlschalter MUX-H wiederum einzeln auswählbar und können verschieden gewertet werden, indem z. B. ein Treffer als Nichttreffer oder aber als solcher gewertet wird. Die damit verbundene Invertierungsfunktion übernimmt das Invertierglied I. Auch kann unabhängig von dem tatsächlich erzeugten Treffersignal ein fest vorgegebenes Signal « 0 » oder « 1 » als Treffer gewertet werden. Die entsprechende Auswahl und Festlegung trifft letztendlich der Auswahlschalter MUX-T abhängig von wirksamen Steuersignalen CMD, der das endgültige Treffersignal T liefert, das in an sich bekannter Weise der die Treffersignale der assoziativen Oberfläche überwachenden Trefferauswertesteuerung — T-AUSW in Fig. 4 — zugeleitet wird. Von dem Treffersignal T kann intern auch die Übernahme des jeweiligen ALU-Ergebnisses oder der Einstellung der Kettungsflipflops PH-FFO bis PH-FF7 in das Ergebnisregister C-REG abhängig von der Einstellung des Auswahlschalters MUX2 (Fig. 1) abhängig gemacht werden, was in Fig. 2 durch die Pfeile $T_ü$ für den Übernahmetakt und C-REG für die Kippstufeneinstellung angedeutet ist. Eine derartige Treffersteuerung arbeitet daher weitgehend universell.

Weitere Anwendungsmöglichkeiten eröffnet darüber hinaus die vorgesehene Maskensteuerung M-ST von Fig. 1, deren Aufbau sich aus Fig. 3 ergibt. Entsprechend den verschiedenen Bitstellen der beiden Masken A-MASK und B-MASK liefert die Maskensteuerung MST acht einzelne Steuersignale, die von den UND-Gliedern U am Ausgang der Maskensteuerung abgeleitet werden. Diese UND-Glieder U sind über ihre invertierten Eingänge durch ein Signal M-INH im Rahmen der externen Maskeninformation EXT-MASK in der Weise steuerbar, daß die über die vorgeschalteten ODER-Glieder O — jeweils bereitgestellten Steuersignale entweder gesperrt oder freigegeben werden, wobei das Signal « 1 » die Abdeckung und das Signal « 0 » die Freigabe der jeweils zugehörigen Bitstelle bewirkt. Abhängig vom Signal M-INH wird also die Maskierfunktion entweder unterdrückt — alle Signalleitungen führen das Signal « 0 » — oder durchgeführt. Beim maskierten Arbeiten, also beim Signal M-INH = 0, werden die über die ODER-Glieder O bereitgestellten Signale weitergeleitet. Diese können wahlweise von der extern zugeführen Bitstrukturmaske EXT-BIT oder von der im Maskenregister M-REG bereitstehenden Bitstrukturmarke abgeleitet werden. Darüber hinaus besteht durch den Auswahlschalter MUX-M abhängig von den Steuersignalen CMD in Verbindung mit der Kippstufe M-FF die Möglichkeit, ein Sperrsignal M zu erzeugen, das über die ODER-Glieder O und die UND-Glieder U an alle Ausgangsleitungen der Maskensteuerung M-ST weitergeleitet wird und damit beide Masken A-MASK und B-MASK vollständig sperrt, so daß die bereitgestellten Operanden von der ALU nicht verarbeitet werden können. Dieses Sperrsignal kann der Reihe nach vom vorliegenden Treffersignal T, von einem Bit einer externen Bytemaske EXT-BYT oder von den einzelnen Bits der im Maskenregister M-REG bereitgestellten Bitstrukturmaske abgeleitet werden. Die Maskensteuerung eröffnet damit eine Vielzahl von Möglichkeiten zur Maskierung, indem alle Verknüpfungseinheiten der assoziativen Oberfläche gleichartig oder individuell mit einer Bitstrukturmaske für das zu verarbeitende Zeichen beaufschlagt werden und/oder indem einzelne Verknüpfungseinheiten entsprechend einer von außen vorgegebenen oder einer intern abgeleiteten Bytestrukturmaske gesperrt werden.

Fig. 4 zeigt das Prinzipschaltbild des gesamten Hybridassoziativspeichers, bestehend aus der assoziativen Oberfläche ASS-FL und dem Basisspeicher B-SP, wobei die assoziative Oberfläche ASS-FL sich aus den in Fig. 1 bis Fig. 3 dargestellten Verknüpfungseinheiten ALV0 bis ALV63 zusammensetzt und der Basisspeicher B-SP entsprechend der bevorzugten Ausführungsform in Anlehnung an die ältere europäische Patentanmeldung 0 123 169 aus 16 Speichergruppen MD0 bis MD15 zusammengesetzt ist, von denen jede, z. B. MD0, mit jeweils aus vier Zeichen oder Byte bestehenden Dateneinheiten zeilenweise zum Ein- oder Ausspeichern über das Datenleitungssystem HAS-BUS ansteuerbar ist. Dateneinheiten können also im direkten Zugriff zeilenweise wie bei einem herkömmlichen Speicher wahlweise in eine der Speichergruppen MD0 bis MD15 ein- oder ausgespeichert werden. Daneben besteht insbesondere für den assoziativen Betrieb des Basisspeichers B-SP die Möglichkeit, aus jeder Speichergruppe gleichzeitig vier Zeichen, und zwar die einander entsprechenden Zeichen von jeweils vier verschiedenen Dateneinheiten je Speichergruppe, anzusteuern und der assoziativen Oberfläche ASS-FL zuzuführen oder von dieser zu übernehmen. Bei einem solchen Ansteuervorgang wird also in einem Zuge eine ganze Byte- oder Zeichenscheibe BS aus im vorliegenden Falle 4 × 16 = 64 Zeichen vom Basisspeicher B-SP zur Verfügung gestellt oder von diesem übernommen. Entsprechend können die 64 Verknüpfungseinheiten ALV0 bis ALV63 der assoziativen Oberfläche ASS-FL gleichzeitig tätig werden.

Diese Art der Zugriffssteuerung für den Basisspeicher B-SP ermöglicht andererseits, daß z. B. in jeder

Bytesäule, z. B. O, des Basisspeichers B-SP die aufeinanderfolgenden Zeichen einer Dateneinheit und Zeichen aufeinanderfolgender Dateneinheiten derselben Verknüpfungseinheit, z. B. ALV0, der assoziativen Oberfläche ASS-FL nacheinander zugeführt werden können, als wären die einzelnen Zeichen der Dateneinheiten vertikal untereinander und nicht horizontal nebeneinander, wenn auch zeilenmäßig versetzt, gespeichert. Datenfolgen werden daher in der Regel von derselben Verknüpfungseinheit der assoziativen Oberfläche verarbeitet.

Eine solche Säulen- oder Stringbildung von Zeichen einer Datenfolge eröffnet verschiedene Möglichkeiten der Einordnung von aus vielen Dateneinheiten zusammengesetzten Dateien in den Basisspeicher B-SP, nämlich die Bildung einer Datei durch einen einzigen solchen String, so daß im vorliegenden Fall 64 verschiedene Dateien gleichzeitig durch die assoziative Oberfläche ASS-FL überprüft werden können, oder aber die Verteilung einer Datei auf die parallelen Strings mit oder ohne Serienschaltung der Strings im Bereich des ganzen oder nur eines Teiles des Basisspeichers, so daß Teile der Datei parallel und damit die Daten als solche schneller überprüft werden können. Die Beschränkung auf vorgegebene Ebenen des Basisspeichers B-SP kann dabei durch eine vorgegebene Adressenmaske AD-MASK für die Ansteueradressen AD gesteuert werden, die z. B. durch die Anfangs- und Endadresse A/E des jeweiligen Dateibereiches über die Adressensteuerung AD-ST anhand von Speichersteuerbefehlen CMD-SP der übergeordneten Steuerung HAS-ST des Hybridassoziativspeichers eingestellt wird.

Gleichzeitig mit der Bereitstellung der Daten aus dem Basisspeicher B-SP werden die Verknüpfungseinheiten ALV0 bis ALV63 der assoziativen Oberfläche ASS-FL von der übergeordneten Steuerung HAS-ST mit den notwendigen Steuerbefehlen CMD-ST versorgt, so daß die vom Basisspeicher zur Verfügung gestellten Zeichen individuell überprüft und verarbeitet werden können. Die für die Bearbeitung der Daten in der assoziativen Oberfläche ASS-FL benötigten Parameter liefern gesonderte Register oder bei Suchverfahren zweckmäßig ein gesonderter Parameterspeicher PAR-SP, der zweckmäßig in gleicher Weise aufgebaut ist wie der Basisspeicher B-SP, allerdings mit dem Unterschied, daß infolge der gleichartigen Beaufschlagung aller Verknüpfungseinheiten ALV... der assoziativen Oberfläche mit einheitlichen externen Parametern lediglich eine Speichergruppe dafür benötigt wird. Mit jeder durch die Steuerung HAS-ST bewirkten Ansteuerung des Parameterspeichers PAR-SP werden beispielsweise vier unterschiedliche Parameter zur Verfügung gestellt, nämlich ein Suchargument SBM (Fig. 1), eine Bitstrukturmaske EXT-BIT (Fig. 3), ein externer Operand EXT-OP (Fig. 1) und ein Gewichtungsfaktor. Die bei der Durchführung von Assoziationsrelationen mit Hilfe der einzelnen Treffersteuerungen T-ST (Fig. 1 und Fig. 2) gewonnenen Treffersignale T0 bis T63 der assoziativen Oberfläche ASS-FL werden in an sich bekannter Weise einer Trefferauswertung T-AUSW zugeführt, von dieser ausgewertet und das gewonnene Ergebnis der übergeordneten Steuerung HAS-ST zugeleitet, die davon abhängig die Arbeitsfolge des Hybridassoziativspeichers steuert. Die Trefferauswertung T-AUSW kann dabei entsprechend Fig. 5 der DE-OS 32 16 905 oder in Anlehnung an Fig. 2 der DE-PS 30 09 329 ausgebildet sein.

Die übergeordnete Steuerung HAS-ST, die insbesondere — wie bei der eingangs genannten DE-OS 32 16 905 (Fig. 1) — als Mikroprozessor ausgebildet sein kann, steuert in an sich bekannter Weise den gesamten Arbeitsablauf des Hybridassoziativspeichers anhand der von außen zugeführten Befehle zur Durchführung vorgegebener Aufgaben, die dann vom Hybridassoziativspeicher autonom ausgeführt werden :

1. Es können Dateneinheiten in den Basisspeicher übernommen oder aus diesem entnommen werden, wobei Listen über die in dem Basisspeicher enthaltenen Dateien mit den ihnen zugeführten Speicherbereichen geführt werden.

2. Es können gleichzeitig alle Zeichen einer horizontalen Zeichenebene des Basisspeichers zur assoziativen Oberfläche durchgeschaltet oder in Form der Ergebnisregisterinhalte von dieser übernommen werden.

3. Es können verschiedene assoziative Prozeduren durchgeführt werden, wobei alle erforderlichen Steuerbefehle und Parameter in fortlaufender Folge bereitgestellt werden.

4. Für vorgegebene Prozeduren benötigte Parameter können vor dem Einleiten der Prozedur in den gesonderten Parameterspeicher geladen werden, aus dem sie dann folgegerecht abgerufen werden.

5. Die auszuführenden Prozeduren können aus vorgegebenen Befehlsfolgen zur Durchführung von Assoziationsrelationen und Verknüpfungsoperationen in gemischter Folge sowie aus trefferabhängigen Befehlen verschiedener Art bestehen.

6. Es können in den Ergebnisregistern der Verknüpfungseinheiten in der assoziativen Oberfläche enthaltene Informationen

a) in die verschiedenen Register derselben Verknüpfungseinheit für alle Verknüpfungseinheiten der assoziativen Oberfläche gleichzeitig übertragen werden,

b) über das Datenleitungssystem von den Verknüpfungseinheiten jeweils einer Speichergruppe gleichzeitig ausgegeben werden oder

c) für alle Verknüpfungseinheiten der assoziativen Oberfläche gleichzeitig in eine vorgegebene horizontale Zeichenebene des Basisspeichers übernommen und aus diesen der assoziativen Oberfläche, z. B. den Maskenregistern, wieder zur Verfügung gestellt werden.

Aufgrund dieser allgemeinen Steuerungsmöglichkeiten ergeben sich eine Vielzahl von möglichen Arbeitsabläufen für die Auswertung der Treffersignale :

1. Die im vorliegenden Falle 64 Treffersignale T der assoziativen Oberfläche ASS-FL können z. B. in Form von zwei 32-Bit-Worten von der Steuerung HAS-ST übernommen werden, wobei die einzelnen Bitstellen dieser beiden Wörter einen festen Bezug zu den zugehörigen Verknüpfungseinheiten ALV... haben, so daß die Steuerung HAS-ST die zu den angezeigten Treffern gehörigen Dateneinheiten adressiert ansteuern und aus dem Basisspeicher B-SP ausspeichern kann.

2. Nicht immer ist eine sofortige Übergabe der jeweils erhaltenen Treffersignale an die Steuerung HAS-ST erwünscht. Man kann daher die Treffersignale T0 bis T63 der gesamten assoziativen Oberfläche ASS-FL zunächst in einer vorgegebenen Bytescheibe BS des Basisspeichers B-SP zwischenspeichern. Dazu wird nach der Durchführung einer Assoziationsrelation und Zwischenspeicherung der erhaltenen Trefferanzeigen TA in einer der Kippstufen PH-FF... (Fig. 2) zunächst das Operandenregister A-REG mit einem externen Operanden EXT-OP geladen, der pro Byte nur eine einzige Bitstelle mit dem Wert « 1 » aufweist. Außerdem wird das andere Operandenregister B-REG mit dem Zeichen 0000 0000 oder einem Trefferzeichen aus dem Basisspeicher B-SP geladen. Beide Operanden werden in der ALU durch die Funktionen « UND » bzw. « ODER » verknüpft und das am Ausgang der ALU auftretende Ergebnismuter abhängig vom gespeicherten Treffer mit dem Signal $T_{\ddot{u}}$ ins Ergebnisregister C-REG übernommen, von wo es als Trefferzeichen in den Basisspeicher B-SP übertragen wird.

Man kann so Treffer aus aufeinanderfolgenden Prozeduren aufsammeln und einer späteren Auswertung zuführen, indem jeweils dieselbe Bitstelle eines Trefferzeichens überschrieben wird, oder aber indem den einzelnen Treffersignalen der aufeinanderfolgenden Prozeduren jeweils eine der im vorliegenden Fall zur Verfügung stehenden acht Bitstellen des Trefferzeichens zugeordnet wird.

3. Die gebildeten Trefferzeichen werden als Masken benutzt, wobei die unmittelbar aus dem Ergebnisregister C-REG oder aus dem Basisspeicher B-SP in das Maskenregister M-REG der zugehörigen Verknüpfungseinheiten in der assoziativen Oberfläche übernommen werden, so daß für die einzelnen Verknüpfungseinheiten AVL... individuelle Masken als Bitstruktur- oder als Bytestrukturmaske zur Verfügung stehen.

4. Unabhängig von der unter Punkt 2) genannten Möglichkeit können bei auftretenden Treffern die Verknüpfungsergebnisse vom Ausgang der ALU unmittelbar in eines der Ergebnisregister C-REG übernommen werden.

5. Zur Durchführung von Ähnlichkeitsbewertungen der von den Zeichen verkörperten Bitmuster mit Bewertung der einzelnen Bits des Zeichens wird mit der ALU-Funktion « GLEICH » ein Treffermuster am Ausgang der ALU erzeugt. Die angezeigten Bit-Treffer werden durch den Quersummenbildner Q-SUM am Ausgang der ALU aufaddiert und das Ergebnis in Form einer Dualzahl in einem der Ergebnisregister C-REG zwischengespeichert. Durch zusätzlich eingeschobene Steueroperationen kann nach jeder Ähnlichkeitsprüfung das erzielte Ergebnis zu einem im Ergebnisregister bereits vorliegenden Ergebnis vorausgegangener Ähnlichkeitsprüfungen addiert werden, so daß man die Einzelbitsummen einer ganzen Prozedur erhält, z. B. für die Ähnlichkeitsprüfung von Zeichenfolgen. Die Ergebnisse können jeweils auch in einer vorgegebenen Bytescheibe des Basisspeichers B-SP abgespeichert werden. Dies ermöglicht auch eine spätere Auswertung, z. B. die Sortierung nach dem Grad der Ähnlichkeit.

6. Zur Gewichtung von Treffersignalen T nach einer durchgeführten Assoziationsrelation werden im Operandenregister A-REG nachfolgend bereitgestellte Gewichtsoperanden zu einem im Ergebnisregister C-REG bereits vorliegenden Ergebnis durch die ALU hinzuaddiert und das neue Gewichtungsergebnis abgespeichert, wobei die Treffer mit unterschiedlichen Gewichten bewertet werden können. Die so gebildeten Gewichtssummen können beispielsweise zur Ähnlichkeitsbewertung von Zeichenfolgen gegenüber einem Suchargument herangezogen werden. Auch in diesem Falle können die Gewichtungsergebnisse in einer vorgegebenen Bytescheibe BS des Basisspeichers B-SP abgespeichert werden.

7. Durch die Trefferauswertesteuerung T-AUSW der assoziativen Oberfläche ASS-FL kann die Anzahl der gleichzeitig auftretenden Treffer T in Form einer Dualzahl ermittelt werden. Das ermöglicht Ähnlichkeitsbewertungen von einzelnen Bytescheiben oder Bytescheibengruppen aus dem Basisspeicher und kann für Sortiervorgänge ausgenutzt werden.

Die für die Assoziationsrelation jeweils benötigten Suchargumente SBM können, wie bereits erläutert, aus verschiedenen Quellen im Operandenregister A-REG bereitgestellt werden. Auch die Zeichen einer Bytescheibe BS des Basisspeichers B-SP können als Suchargumente dienen, so daß diese mit einer beliebigen Anzahl anderer Bytescheiben des Basisspeichers verglichen oder verknüpft werden kann.

Insgesamt ermöglicht also die gemäß der Erfindung ausgebildete assoziative Oberfläche des Hybridassoziativspeichers eine Vielzahl interner Operationen zur Bewältigung der unterschiedlichsten Aufgaben, wobei die Leitungsfähigkeit der assoziativen Oberfläche durch die Kombination mit dem speziell ausgebildeten Basisspeicher noch wesentlich gesteigert werden kann, so daß sich insgesamt ein Hybridassoziativspeicher mit bisher nicht erreichter universeller Anwendbarkeit und Leistungsfähigkeit verbunden mit fast unbegrenzter Speicherkapazität ergibt.

**Patentansprüche**

1. Hybrid-Assoziativspeicher bestehend aus einem nicht assoziativen Basisspeicher (B-SP) und einer assoziativen Oberfläche (ASS-FL), wobei der Basisspeicher (B-SP) in Gruppen von einzeln auswählbaren Dateneinheiten unterteilt ist und in der assoziativen Oberfläche (ASS-FL) eine der Anzahl von Dateneinheiten je Gruppe entsprechende Anzahl von Verknüpfungseinheiten für jeweils mehrere Bits vorgesehen ist, die jeweils eine Dateneinheit in assoziativer Weise überprüfen, so daß der assoziativen Oberfläche (ASS-FL) jeweils Gruppen von Dateneinheiten zugeführt und diese parallel überprüft werden können, dadurch gekennzeichnet,

— daß sowohl zur Durchführung von Assoziationsrelationen als auch von Verknüpfungsfunktionen die Verknüpfungseinheit (ALV...) der assoziativen Oberfläche (ASS-FL) eine einzige arithmetisch-logische Einheit (ALU) mit einer Arbeitsbreite (z. B. acht Bit) für jeweils ein Zeichen als Dateneinheit und mit zwei Operandenregistern (A-REG, B-REG) und wenigstens einem Ergebnisregister (C-REG) vorgesehen ist,

— daß mit der arithmetisch-logischen Einheit (ALU) eine Auswerteeinrichtung (ANZ-ST) zur Ableitung der Anzeigen aus den jeweiligen Ergebnissignalen und eine Auswerteeinrichtung (T-ST) zur Erzeugung eines Treffersignales (T) durch Korrelation der jeweils gewünschten Assoziationsrelation mit den Anzeigen vorgesehen ist,

— daß jeweils zwischen Operandeneingang der arithmetisch-logischen Einheit (ALU) und dem zugehörigen Operandenregister (A-REG bzw. B-REG) eine steuerbare Maskiereinrichtung (A-MASK bzw. B-MASK) vorgesehen ist und

— daß gesteuert durch Auswahlschalter (A-MUX, B-MUX) in Verbindung mit Steuerbefehlen (CMD) einer übergeordneten Steuereinrichtung wahlweise Assoziationsrelationen oder Verknüpfungsfunktionen durchgeführt werden können, wobei zur Durchführung von Assoziationsrelationen die zu prüfende Dateneinheit aus dem Basisspeicher (B-SP) dem einen Operandenregister (z. B. B-REG) und das benötigte Suchargument (SBM) dem anderen Operandenregister (A-REG) zugeführt und der jeweilige Assoziationsbereich innerhalb der Dateneinheit durch die Maskiereinrichtungen (A-MASK und B-MASK) in Verbindung mit einer Maskensteuerung (M-ST) festgelegt wird.

2. Hybrid-Assoziativspeicher nach Anspruch 1, dadurch gekennzeichnet, daß aus den jeweils zur Verfügung gestellten Anzeigen entsprechend den möglichen Assoziationsrelationen entsprechend viele Steuersignale gebildet werden, aus denen jeweils das der durchgeführten Assoziationsrelation entsprechende Steuersignal als Treffersignal (T) ausgewählt wird.

3. Hybrid-Assoziativspeicher nach einem der Ansprüche 1 oder 2, dadurch gekennzeichnet, daß mit der Auswerteeinrichtung (T-ST) zur Erzeugung des Treffersignals (T) eine Einrichtung zur Kettung von Einzeltreffersignalen von mehreren aufeinanderfolgend oder teilweise aufeinanderfolgend durchgeführten Assoziationsrelationen bei der Überprüfung von Datenfolgen und zur Erzeugung eines Globaltreffersignales bei erfüllter Kettungsbedingung vorgesehen ist.

4. Hybrid-Assoziativspeicher nach Anspruch 3, dadurch gekennzeichnet, daß die Einrichtung zur Kettung von Treffersignalen wenigstens eine bistabile Kippstufe aufweist, die sowohl unbedingt als auch bedingt abhängig von den Einzeltreffersignalen gesetzt oder zurückgesetzt werden kann und am Ende einer Prüfung bei erfüllter Kettungsbedingung ein globales Treffersignal liefert.

5. Hybrid-Assoziativspeicher nach Anspruch 4, dadurch gekennzeichnet, daß eine der Arbeitsbreite der Verknüpfungseinheit (ALV...) entsprechende Anzahl von einzeln auswählbaren bistabilen Kippstufen (z. B. PH-FFO bis PH-FF7) vorgesehen ist und daß die Ausgänge dieser Kippstufen bei einem entsprechenden Steuersignal mit dem Eingang des Ergebnisregisters (C-REG) verbindbar sind.

6. Hybrid-Assoziativspeicher nach einem der Ansprüche 1 bis 5, dadurch gekennzeichnet, daß die Übernahme des Ergebnisses der arithmetisch-logischen Verknüpfungseinheit (ALU) in das Ergebnisregister (C-REG) durch das vorliegende Treffersignal (T) steuerbar ist.

7. Hybrid-Assoziativspeicher nach einem der Ansprüche 1 bis 6, dadurch gekennzeichnet, daß am Ausgang der arithmetisch-logischen Verknüpfungseinheit (ALU) eine Einrichtung (Q-SUM) zur Bildung der Quersumme aus dem Ergebnis der Verknüpfungseinheit vorgesehen ist.

8. Hybrid-Assoziativspeicher nach einem der Ansprüche 1 bis 7, dadurch gekennzeichnet, daß zwischen dem Ausgang und den Eingängen der arithmetisch-logischen Einheit (ALU) eine Einrichtung (S-REG) zur zyklischen Verschiebung der Bitstellen innerhalb einer weiterzuleitenden Dateneinheit vorgesehen ist.

9. Hybrid-Assoziativspeicher nach Anspruch 7 und 8, dadurch gekennzeichnet, daß die Einrichtung zur zyklischen Verschiebung aus einem Ringschieberegister (S-REG) am Ausgang der arithmetisch-logischen Einheit (ALU) besteht und die Ausgänge von Ringschieberegister (S-REG) und Quersummenbildner (Q-SUM) wahlweise mit dem Ergebnisregister (C-REG) verbindbar sind.

10. Hybrid-Assoziativspeicher nach Anspruch 8, dadurch gekennzeichnet, daß die Operandenregister (A-REG, B-REG) als Ringschieberegister ausgebildet sind.

11. Hybrid-Assoziativspeicher nach einem der Ansprüche 1 bis 10, dadurch gekennzeichnet, daß zur Durchführung von Ähnlichkeitsbewertungen das jeweilige Treffersignal (T) mit einem numerischen Gewichtsfaktor multipliziert und das Ergebnis gespeichert wird.

12. Hybrid-Assoziativspeicher nach Anspruch 11, dadurch gekennzeichnet, daß die Ergebnisse von mehreren gewichteten Treffersignalen verschiedener aufeinanderfolgender Prüfungen summiert werden.

13. Hybrid-Assoziativspeicher nach Anspruch 11 oder 12, dadurch gekennzeichnet, daß zur Aufsummierung gewichteter Treffersignale ein Binärzähler mit einer der Arbeitsweite der arithmetisch-logischen Verknüpfungseinheit entsprechenden Anzahl von Binärstellen vorgesehen ist.

14. Hybrid-Assoziativspeicher nach Anspruch 11 oder 12, dadurch gekennzeichnet, daß die Gewichtung eines Treffersignales durch eine eingeschobene Elementaroperation der Verknüpfungseinheit (ALV) durch Addition des jeweiligen Gewichtungsfaktors zum jeweiligen Zwischenergebnis im Ergebnisregister (C-REG) erfolgt.

15. Hybrid-Assoziativspeicher nach einem der Ansprüche 1 bis 14, dadurch gekennzeichnet, daß für die interne Steuerung der Maskiereinrichtungen (A-MASK, B-MASK) neben den beiden Operandenregistern (A-REG, B-REG) ein Maskenregister (M-REG) vorgesehen ist, das über Auswahlschalter (M-MUX) sowohl mit dem Basisspeicher (B-SP) als auch mit dem Ausgang des Ergebnisregisters (C-REG) verbindbar ist.

16. Hybrid-Assoziativspeicher nach Anspruch 15, dadurch gekennzeichnet, daß die Maskensteuerung (M-ST) wahlweise jeweils beide Maskiereinrichtungen einheitlich für ein unmaskiertes oder maskiertes Arbeiten freigibt, bei maskiertem Arbeiten wahlweise die im Maskenregister (M-REG) enthaltene oder eine von außen zugeführte Bitstrukturmaske zur Verfügung stellt oder anhand eines besonderen Steuersignales (M) die Verknüpfungseinheit sperrt.

17. Hybrid-Assoziativspeicher nach Anspruch 16, dadurch gekennzeichnet, daß das besondere Steuersignal zur Sperrung der Verknüpfungseinheit (ALV...) wahlweise von einem äußeren Sperrsignal (EXT-BYT), von dem bei der Durchführung einer Assoziationsrelation von der Verknüpfungseinheit zuvor selbst ermittelten Treffersignal (T) oder aber von einem Bit der im Maskenregister (M-REG) enthaltenen Bitstrukturmaske durch einen Auswahlschalter (DEMUX) ableitbar ist.

18. Hybrid-Assoziativspeicher nach einem der Ansprüche 1 bis 17, dadurch gekennzeichnet, daß zur Bereitstellung der von einer Verknüpfungseinheit (ALV...) der assoziativen Oberfläche (ASS-FL) zur Überprüfung einer zugeführten Datenfolge benötigten unterschiedlichen Parameter (Suchargument, Bitstrukturmaske, Gewichtungsfaktor, Operand) Einzelregister oder gesondert adressierbare Hilfsspeicher vorgesehen sind, die zu jeder von der Verknüpfungseinheit (ALV...) zu prüfenden Dateneinheit die jeweils zugehörigen Parameter liefern.

19. Hybrid-Assoziativspeicher nach einem der Ansprüche 1 bis 18, dadurch gekennzeichnet, daß der mit der assoziativen Oberfläche (ASS-FL) gekoppelte Basisspeicher (B-SP) in einer oder mehreren Speichergruppen (z. B. MDO) zeilenweise einzeln adressierbare Dateneinheiten jeweils vertikal aufeinanderfolgend gespeichert enthält, wobei die Dateneinheiten jeweils in Zeichen entsprechende Subeinheiten unterteilt sind und jeder Subeinheitsspalte eine Verknüpfungseinheit (ALV) der assoziativen Oberfläche (ASS-FL) zugeordnet ist, und daß jeweils innerhalb einer Speichergruppe (z. B. MDO) durch jeweils versetzte Einordnung der Subeinheiten mehrerer Dateneinheiten gemäß einem vorgegebenen Einordnungsschema in Verbindung mit intern gesteuerten Adressenumordnern für die Zeilenadressen und Datenumordnern für die Subeinheiten der betroffenen Dateneinheiten entweder alle Subeinheiten je einer Dateneinheit aus jeder Speichergruppe (z. B. MDO) oder aber die einander korrespondierenden Subeinheiten einer entsprechenden Anzahl von Dateneinheiten als jeweils eine Dateneinheit aus jeder Speichergruppe zur assoziativen Oberfläche (ASS-FL) durchschaltbar sind.

20. Hybrid-Assoziativspeicher nach Anspruch 18 und 19, dadurch gekennzeichnet, daß die Parameter jeweils derselben Art als Subeinheiten in Parameter-Dateneinheiten zusammengefaßt extern bereitgestellt werden, daß die Hilfsspeicher für die Parameter als einheitlicher Speicher (PAR-SP) in gleicher Weise wie der Basisspeicher (BSP) organisiert sind und entsprechende Adressenumordner und Datenumordner die richtige Zuordnung der jeweils benötigten unterschiedlichen Parametersubeinheiten zu den aus dem Basisspeicher (B-SP) zur Verfügung gestellten Datensubeinheiten sicherstellen, wobei die jeweils bereitgestellten Parametersubeinheiten einheitlich auf alle Verknüpfungseinheiten (ALV...) der assoziativen Oberfläche (ASS-FL) einwirken.

21. Hybrid-Assoziativspeicher nach Anspruch 19 oder 20, dadurch gekennzeichnet, daß zusätzlich ein extern ladbares gemeinsames Maskenregister für die Freigabe oder Sperrung der die assoziative Oberfläche (ASS-FL) bildenden Verknüpfungseinheiten (ALV...) vorgesehen ist, das über die jeweilige Maskensteuerung (M-ST) der einzelnen Verknüpfungseinheiten (ALV...) in die assoziative Oberfläche (ASS-FL) eingreift und dadurch die Prüfung der gleichzeitig der assoziativen Oberfläche zugeführten Datensubeinheiten steuert.

22. Hybrid-Assoziativspeicher nach einem der Ansprüche 19 bis 21, dadurch gekennzeichnet, daß im Basisspeicher (B-SP) wenigstens eine mit derselben Adresse ansteuerbare Dateneinheitszeile in jeder Speichergruppe als Hilfsspeicher vorgesehen ist, in die die Inhalte der Ergebnisregister (C-REG) aller Verknüpfungseinheiten (ALV...) der assoziativen Oberfläche (ASS-FL) gleichzeitig in fester Zuordnung einspeicherbar sind, so daß Treffersignale für eine spätere Auswertung und für die interne Maskiersteuerung über das Maskenregister (M-REG) in den Verknüpfungseinheiten (ALV...) der assoziativen Oberfläche zur Verfügung stehen.

## Claims

1. A hybrid associative store comprising a non-associative base store (B-SP) and an associative area (ASS-FL), where the base store (B-SP) is divided in groups of individually selectable data units, and in the associative area (ASS-FL) a number of logic-linking units — corresponding to the number of data units in each group — is provided, in each case for a plurality of bits, where said logic-linking units each check a

**0 126 896**

data unit in associative fashion so that the associative area (ASS-FL) can in each case be supplied with groups of data units which can be checked in parallel, characterised in that

— that in order to carry out both association relations and logic-linking functions the logic-linking unit (ALV...) of the associative area (ASS-FL) comprises one single arithmetic-logic unit (ALU) which has an operating width (e. g. eight bits) for in each case one character as data unit and which is provided with two operand registers (A-REG, B-REG) and at least one result register (C-REG),

— that the arithmetic-logic unit (ALU) is connected to an analysis device (ANZ-ST) which derives the displays from the respective result signals, and to an analysis device (T-ST) which generates a hit signal (T) by correlating the particular desired association relation with the displays,

— that a controllable masking device (A-MASK and B-MASK) is provided between the operand input of the arithmetic-logic unit (ALU) and the associated operand register (A-REG, B-REG), and

— that under the control of selector switches (A-MUX, B-MUX), in association with control commands (CMD) of a superordinate control device, association relations or logic-linking functions can be selectively carried out, where, in order that association relations may be carried out the data unit to be tested is fed from the base store (B-SP) to the first operand register (e. g. B-REG) and the required search argument (SBM) is supplied to the other operand register (A-REG) and where the respective association zone within the data unit is specified by masking devices (A-MASK and B-MASK) in association with a mask control unit (M-ST).

2. A hybrid-associative store as claimed in claim 1, characterised in that from the available displays a number of control signals corresponding to the possible association relations are formed, from which control signals the control signal corresponding to the performed association relation is selected as hit signal (T).

3. A hybrid-associative store as claimed in one of the claims 1 or 2, characterised in that the analysis device (T-ST) which serves to generate the hit signal (T) is provided with a device which serves to chain individual hit signals of a plurality of association relations, which are performed consecutively or partially consecutively, during the checking of the data sequences and which serves to generate a global hit signal when the chaining condition is fulfilled.

4. A hybrid-associative store as claimed in claim 3, characterised in that the device which serves to chain hit signals includes at least one bistable flip-flop which can be set or reset either unconditionally or conditionally in dependence upon the individual hit signals and which supplies a global hit signal at the end of a checking procedure when the chaining condition is fulfilled.

5. A hybrid-associative store as claimed in claim 4, characterised in that a number of individually-selectable, bistable flip-flops (e. g. PH-FFO to PH-FF7), corresponding to the operating breadth of the logic-linking unit (ALV...), is provided and that the outputs of these flip-flops can be connected to the input of the result register (C-REG) in the presence of a corresponding control signal.

6. A hybrid-associative store as claimed in one of the claims 1 to 5, characterised in that the transfer of the result of the arithmetic-logic logic-linking unit (ALU) into the result register (C-REG) can be controlled by the prevailing hit signal (T).

7. A hybrid-associative store as claimed in one of the claims 1 to 6, characterised in that a device (Q-SUM) which serves to form the horizontal check sum of the result of the logic-linking unit is arranged at the output of the arithmetic-logic logic-linking unit (ALU).

8. A hybrid-associative store as claimed in one of the claims 1 to 7, characterised in that a device (S-REG) which serves to cyclically shift the bit locations within a data unit to be forwarded is arranged between the output and the inputs of the arithmetic-logic unit (ALU).

9. A hybrid-associative store as claimed in claims 7 and 8, characterised in that the device which performs the cyclic shift comprises of a cyclic shift register (S-REG) at the output of the arithmetic-logic unit (ALU), and the outputs of the cyclic shift register (S-REG) and the horizontal check sum forming device (Q-SUM) can be selectively connected to the result register (C-REG).

10. A hybrid-associative store as claimed in claim 8, characterised in that the operand registers (A-REG, B-REG) are cyclic shift registers.

11. A hybrid-associative store as claimed in one of the claims 1 to 10, characterised in that in order that similarity evaluations may be performed, the respective hit signal (T) is multiplied by a numerical weight factor and the result is stored.

12. A hybrid-associative store as claimed in claim 11, characterised in that the results of a plurality of weighted hit signals of various, consecutive checking procedures are added.

13. A hybrid-associative store as claimed in claim 11 or 12, characterised in that for the addition of weighted hit signals, a binary counter is provided which has a number of binary locations corresponding to the operating breadth of the arithmetic-logic logic-linking unit.

14. A hybrid-associative store as claimed in claim 11 or 12, characterised in that the weighting of a hit signal is carried out by means of an inserted elementary operation of the logic-linking unit (ALV) in that the respective weighting factor is added to the respective intermediate result in the result register (C-REG).

15. A hybrid-associative store as claimed in one of the claims 1 to 14, characterised in that for the internal control of the masking devices (A-MASK, D-MASK), in addition to the two operand registers (A-REG, B-REG) a mask register (M-REG) is provided which can be connected via selector switches (M-MUX)

10

both to the base store (B-SP) and to the output of the result register (C-REG).

16. A hybrid-associative store as claimed in claim 15, characterised in that the mask control unit (M-ST) selectively enables both masking devices commonly for unmasked or masked operation, and in the case of masked operation selectively makes available either the bit structure mask included in the mask register (M-REG) or an externally supplied bit structure mask or blocks the logic-linking unit by means of a special control signal (M).

17. A hybrid-associative store as claimed in claim 16, characterised in that the special control signal which serves to block the logic-linking unit (ALV...) can be selectively derived by means of a selector switch (DEMUX) from an external blocking signal (EXT-BYT), from the hit signal (T) previously determined during the implementation of an association relation by the logic-linking unit, or else from one bit of the bit structure mask contained in the mask register (M-REG).

18. A hybrid-associative store as claimed in one of the claims 1 to 17, characterised in that in order that the various parameters (search argument, bit structure mask, weighting factor, operand) required by a logic-linking unit (ALV...) of the associative area (ASS-FL) may be made available, in order to check a supplied data sequence, individual registers or specially addressable auxiliary stores are provided which supply the associated parameters for each data unit to be checked by the logic-linking unit (ALV...).

19. A hybrid-associative store as claimed in one of the claims 1 to 18, characterised in that the base store (B-SP) which is coupled to the associative area (ASS-FL) stores data units which can be individually addressed row by row in vertical succession in one or more than one storage group (e. g. MDO), where the data units are each divided into sub-units which correspond to characters and each sub-unit column is assigned a logic-linking unit (ALV) of the associative area (ASS-FL), and that within each storage group (e. g. MDO), by means of the offset classification of the sub-units of a plurality of data units in accordance with a predetermined classification plan, in combination with internally controlled address re-classifiers for the row addresses and data re-classifiers for the sub-units of the data units in question, either all these sub-units of one data unit from each storage group (e. g. MDO) or else the mutually corresponding sub-units of a corresponding number of data units, in each case representing one data unit from each storage group, can be switched through to the associative area (ASS-FL).

20. A hybrid-associative store as claimed in claims 18 and 19, characterised in that the parameters which are each of the same type are made available externally in the form of sub-units combined in parameter-data units, that the auxiliary stores for the parameters are organised as uniform stores (PAR-SP) in the same manner as the base store (BSP) and corresponding address re-classifiers and data re-classifiers ensure the correct allocation of the various required parameter sub-units to the data sub-units made available from the base store (B-SP), where the parameter sub-units which are in each case made available uniformly influence all the logic-linking units (ALV...) of the associative area (ASS-FL).

21. A hybrid-associative store as claimed in claim 19 or 20, characterised in that an externally loadable, common mask register is additionally provided which serves to enable or block the logic-linking units (ALV...) which form the associative area (ASS-FL) and which, via the respective mask control unit (M-ST) of the individual logic-linking units (ALV...), intervenes into the associative area (ASS-FL) and thereby controls the checking of the data sub-units which are simultaneously supplied to the associative area.

22. A hybrid-associative store as claimed in one of the claims 19 to 21, characterised in that in the base store (B-SP) at least one data unit row in each storage group, which can be driven by the same address, is provided as auxiliary store, into which the contents of the result registers (C-REG) of all the logic-linking units (ALV...) of the associative area (ASS-FL) can be simultaneously input in a fixed assignment, so that hit signals for later analysis and for the internal masking control unit are made available via the mask register (M-REG) in the logic-linking units (ALV...) of the associative area.

## Revendications

1. Mémoire associative hybride constituée par une mémoire de base non associative (B-SP) et une surface associative (ASS-FL), dans laquelle la mémoire de base (B-SP) est subdivisée en groupes d'unités de données pouvant être sélectionnés de façon individuelle, et, dans la surface associative (ASS-FL), il est prévu, pour respectivement plusieurs bits, un nombre, correspondant au nombre d'unités de données pour chaque groupe, d'unités combinatoires qui contrôlent respectivement une unité de données de façon associative de sorte que respectivement des groupes d'unités de données sont envoyées à la surface associative (ASS-FL) et que ces unités de données peuvent être contrôlées en parallèle, caractérisée par le fait
— qu'aussi bien pour le déroulement de relations d'association que de fonctions combinatoires il est prévu, dans l'unité combinatoire (ALV...) de la surface associative (ASS-FL), une seule unité arithmético-logique (ALU) possédant une largeur de travail (par exemple huit bits) pour respectivement un caractère en tant qu'unité de données et deux registres d'opérandes (A-REG, B-REG) et au moins un registre de résultats (C-REG),
— qu'il est prévu, avec l'unité logique arithmétique (ALU), un dispositif d'exploitation (ANZ-ST) servant à dériver les indications tirées des signaux respectifs de résultats, et un dispositif d'évaluation (T-ST) servant à produire un signal de coup au but (T) par corrélation de la relation respective désirée

11

d'association, avec les affichages,

— qu'un dispositif commandable de masquage (A-MASK ou B-MASK) est prévu respectivement entre l'entrée des opérandes de l'unité arithmético-logique (ALU) et le registre d'opérandes associé (A-REG ou B-REG), et

— qu'au choix des relations d'association ou des fonctions combinatoires peuvent être exécutées, sur la commande de commutateurs de sélection (A-MUX, B-MUX) et en liaison avec des instructions de commande (CMD) d'un dispositif de commande de rang supérieur, auquel cas pour l'exécution de relations d'association, l'unité de données devant être contrôlé est envoyée depuis la mémoire de base (B-SP) à un registre d'opérandes (par exemple B-REG) et l'argument de recherche nécessaire (SBM) est envoyé à l'autre registre d'opérandes (A-REG) et que la zone respective d'association est fixée à l'intérieur de l'unité de données par les dispositifs de masquage (A-MASK et B-MASK) en liaison avec un dispositif de commande de masque (M-ST).

2. Mémoire associative hybride suivant la revendication 1, caractérisée par le fait qu'à partir des affichages respectivement disponibles se trouvent formés, conformément aux relations possibles d'association, de nombreux signaux de commande, parmi lesquels le signal de commande correspondant à la relation exécutée d'association, est choisi en tant que signal de coup au but (T).

3. Mémoire associative hybride suivant l'une des revendications 1 ou 2, caractérisée par le fait qu'avec le dispositif d'évaluation (T-ST) servant à produire le signal de coup au but (T), il est prévu un dispositif servant à réaliser le chaînage de signaux individuels de coups au but de plusieurs relations d'association exécutées de façon successive ou partiellement de façon successive, lors du contrôle de suites de données, et pour l'obtention d'un signal de coup au but global lorsque la condition de chaînage est satisfaisante.

4. Mémoire associative hybride suivant la revendication 3, caractérisée par le fait que le dispositif servant à réaliser le chaînage des signaux de coups au but comporte au moins un étage à bascule bistable, qui peut être positionné ou ramené à l'état initial aussi bien de façon inconditionnelle que de façon conditionnelle en fonction des signaux individuels de coups au but et délivre un signal global de coup au but à la fin d'un contrôle lorsque la condition de chaînage est satisfaite.

5. Mémoire associative hybride suivant la revendication 4, caractérisée par le fait qu'il est prévu un nombre, correspondant à la largeur de travail de l'unité combinatoire (ALV...), d'étages à bascule bistable (par exemple PH-FF0 à PH-FF7) pouvant être sélectionnés individuellement et que les sorties de ces étages à bascule peuvent être réunies à l'entrée d'un registre de résultats (C-REG), pour un signal de commande correspondant.

6. Mémoire associative hybride suivant l'une des revendications 1 à 5, caractérisée par le fait que le transfert de résultats de l'unité combinatoire arithmético-logique (ALU) dans le registre de résultats (C-REG) peut être commandé par le signal de coup au but (T) présent.

7. Mémoire associative hybride suivant l'une des revendications 1 à 6, caractérisée par le fait qu'il est prévu, à la sortie de l'unité combinatoire arithmético-logique (ALU), un dispositif (Q-SUM) servant à former la somme de l'addition à partir du résultat de l'unité combinatoire.

8. Mémoire associative hybride suivant l'une des revendications 1 à 7, caractérisée par le fait qu'il est prévu, entre la sortie et les entrées de l'unité arithmético-logique (ALU) un dispositif (ST-REG) servant à décaler cycliquement les positions binaires à l'intérieur d'une unité de données devant être retransmise.

9. Mémoire associative hybride suivant les revendications 7 et 8, caractérisée par le fait que le dispositif servant à réaliser le décalage cyclique est constitué par un registre à décalage en anneau (S-REG) raccordé à la sortie de l'unité arithmético-logique (ALU) et que les sorties de registres à décalage en anneau (S-REG) et de dispositifs (Q-SUM) de la formation de sommes d'additions peuvent être reliés au choix au registre de résultats (C-REG).

10. Mémoire associative hybride suivant la revendication 8, caractérisée par le fait que les registres d'opérandes (A-REG, B-REG) sont réalisés sous la forme de registres à décalage en anneau.

11. Mémoire associative hybride suivant l'une des revendications 1 à 10, caractérisée par le fait que pour la mise en œuvre d'évaluation de vraisemblance, le signal respectif de coup au but (T) est multiplié par un facteur pondéral numérique et que le résultat est mémorisé.

12. Mémoire associative hybride suivant la revendication 11, caractérisée par le fait que les résultats de plusieurs signaux pondérés de coups au but fournis par différents contrôles successifs sont additionnés.

13. Mémoire associative hybride suivant la revendication 11 ou 12, caractérisée par le fait que pour effectuer la sommation de signaux pondérés de coups au but, il est prévu un compteur binaire possédant un nombre de positions binaires, qui correspond au mode de fonctionnement de l'unité combinatoire arithmético-logique.

14. Mémoire associative hybride suivant la revendication 11 ou 12, caractérisée par le fait que la pondération du signal de coup au but est réalisée au moyen d'une opération élémentaire déclenchée de l'unité combinatoire (ALV) par addition du facteur respectif de pondération au résultat intermédiaire respectif dans le registre de résultats (C-REG).

15. Mémoire associative hybride suivant l'une des revendications 1 à 14, caractérisée par le fait que pour la commande interne du dispositif de masquage (A-MASK, B-MASK), il est prévu, en dehors des deux registres d'opérandes (A-REG, B-REG), un registre de masques (M-REG) qui peut être relié par

**0 126 896**

l'intermédiaire de commutateurs de sélection (M-MUX) aussi bien à la mémoire de base (B-SP) qu'à la sortie du registre de résultats (C-REG).

16. Mémoire associative hybride suivant la revendication 15, caractérisée par le fait que le dispositif (M-ST) de commande de masque libère au choix respectivement deux dispositifs de masquage d'un seul bloc pour un travail non masqué ou masqué, dispose au choix, lors d'un travail masqué, du masque à structure binaire contenu dans le registre de masques (M-REG) ou d'un masque à structure binaire envoyé de l'extérieur ou bien bloque l'unité combinatoire sur la base d'un signal de commande particulier (M).

17. Mémoire associative hybride suivant la revendication 16, caractérisée par le fait que le signal de commande particulier servant à bloquer l'unité combinatoire (ALV...) peut être dérivé au choix d'un signal de blocage de l'extérieur (EXT-BYT), du signal de coup au but (T) déterminé lui-même préalablement lors de l'exécution d'une relation d'association, par l'unité logique, ou bien d'un bit du masque à structure binaire contenu dans le registre de masques (M-REG), par un commutateur de sélection (DEMUX).

18. Mémoire associative hybride suivant l'une des revendications 1 à 17, caractérisée par le fait que pour la mise à disposition des différents paramètres (argument de recherche, masque à structure binaire, facteur de pondération, opérandes), qui sont nécessaires à l'unité combinatoire (ALV...) de la surface associative (ASS-FL) pour le contrôle d'une suite de données envoyées, il est prévu des registres individuels ou des mémoires auxiliaires pouvant être adressées séparément et qui délivrent à chaque unité de données devant être contrôlée par l'unité combinatoire (ALV...), les paramètres respectivement associés.

19. Mémoire associative hybride suivant l'une des revendications 1 à 18, caractérisée par le fait que la mémoire de base (B-SP) couplée à la surface associative (ASS-FL) contient, dans un ou plusieurs groupes de mémoire (par exemple MDO), des unités de données pouvant être adressées individuellement ligne par ligne, qui sont respectivement mémorisées verticalement les unes à la suite des autres, auquel cas les unités de données sont subdivisées respectivement en sous-unités correspondant à des caractères et à chaque colonne de sous-unités est associée une unité combinatoire (ALV) de la surface associée (ASS-FL), et que respectivement à l'intérieur d'un groupe de mémoire (par exemple MDO), soit toutes les sous-unités d'une unité de données peuvent être transférées directement depuis ce groupe de mémoire (par exemple MDO) à la surface associative (SS-FL), soit les sous-unités se correspondant entre elles d'un nombre correspondant d'unités de données peuvent être transférées directement et respectivement sous la forme d'une unité respective de données, depuis chaque groupe de mémoire en direction de la surface associative (SS-FL), grâce à un rangement respectivement décalé des sous-unités de plusieurs unités de données conformément à un schéma de rangement prédéterminé en liaison avec des dispositifs de réarrangement d'adresses commandés de façon interne pour les adresses de lignes et des dispositifs de réarrangement de données pour les sous-unités des unités de données considérées.

20. Mémoire associative hybride suivant les revendications 18 et 19, caractérisée par le fait que les paramètres, qui sont respectivement d'un même type, sont mis à disposition de l'extérieur en étant réunis sous la forme de sous-unités dans des unités de données de paramètres, que les mémoires auxiliaires pour les paramètres sont organisées sous la forme d'une mémoire unitaire (PAR-SP) de la même manière que la mémoire de base (B-SP) et que des dispositifs de réarrangement d'adresses et des dispositifs de réarrangement de données correspondants garantissent l'association correcte des différentes sous-unités de paramètres, respectivement nécessaires, aux unités de données mises à disposition à partir de la mémoire de base (B-SP), auquel cas les sous-unités de paramètres respectivement mises à disposition agissent de façon uniforme sur toutes les unités combinatoires (ALV...) de la surface associative (ASS-FL).

21. Mémoire associative hybride suivant la revendication 19 ou 20, caractérisée par le fait qu'il est prévu, en supplément, un registre commun de masques, pouvant être chargé de l'extérieur, pour l'autorisation et le blocage des unités combinatoires (ALV...) constituant la surface associative (ASS-FL) et qui a accès, par l'intermédiaire du dispositif respectif (M-ST) de commande de masques, aux différentes unités combinatoires (ALV...) dans la surface associative (ASS-FL) et commande de ce fait le contrôle des sous-unités de données envoyées simultanément à la surface associative.

22. Mémoire associative hybride suivant l'une des revendications 19 à 21, caractérisée par le fait que dans la mémoire de base (B-SP), il est prévu au moins une ligne d'unités de données, pouvant être commandée par la même adresse, dans chaque groupe de mémoire en tant que mémoire auxiliaire dans laquelle les contenus des registres de résultats (C-REG) de toutes les unités combinatoires (ALV...) de la mémoire associative (ASS-FL) peuvent être mémorisés simultanément selon une association fixe, de sorte que les signaux de coups au but pour une évaluation ultérieure et pour la commande interne de masquage sont disponibles par l'intermédiaire du registre de masques (M-REG) dans les unités combinatoires (ALV...) de la surface associative.

13

# F I G 1

FIG 2

# FIG 3

# FIG 4